# EUROPÄISCHE PATENTSCHRIFT

(11) **EP 1 172 314 B1**
(45) Veröffentlichungstag und Bekanntmachung des Hinweises auf die Patenterteilung: **09.04.2003**
(21) Anmeldenummer: 01116832.5
(22) Anmeldetag: 10.07.2001
(51) Int. Cl.: B65G 53/66, B65G 53/14, B65G 53/60

(54) **Druckluftfördergerät für Schüttgüter**
Device for feeding bulk material by means of air pressure
Dispositif d'alimentation de substances en vrac au moyen de pression d'air

(30) Priorität: 12.07.2000 DE 10033837
(43) Veröffentlichungstag der Anmeldung: 16.01.2002
(73) Patentinhaber: Wilhelm, Nikolaus, 83026 Rosenheim (DE)
(72) Erfinder: Wilhelm, Nikolaus, 83026 Rosenheim (DE)
(74) Vertreter: Alber, Norbert, Dipl.-Ing.

(56) Entgegenhaltungen:
- EP-A- 0 047 615
- DE-A- 2 659 058

## Beschreibung

Die Erfindung betrifft ein Druckluftfördergerät für Schüttgüter, insbesondere für Kunststoffgranulat oder -pulver, gemäß dem Oberbegriff des Anspruches 1.

Vor allem in der kunststoffverarbeitenden Industrie müssen Schüttgüter, insbesondere Neuware-Granulate und Mahlgut aus Recycling-Mühlen, zu Verarbeitungsmaschinen bzw. Trocknem, die auf den Verarbeitungsmaschinen angeordnet sind, befördert werden. Zur Förderung werden bekanntermaßen entweder sogenannte Turbinenfördergeräte mit Wechselstromturbinen oder Saugfördersysteme verwendet, die aus einem Vakuumerzeuger mit Drehstromantrieb und einem separaten Förderabscheider bestehen.

Neben diesen beiden Fördermethoden, die einen relativ großen apparativen Aufwand und Verschleiß an den Turbinen mit sich bringen, ist weiterhin eine Druckluftförderung bekannt, bei der eine Sauglanze in den zu fördernden Schüttgutvorrat gesteckt und Druckluft in die Sauglanze eingeführt wird, die innerhalb der Sauglanze in Förderrichtung umgeleitet wird und dadurch eine Saugwirkung erzeugt. Eine solche Förder vorrichtung ist aus der DE-A-26 59 058 bekannt.

In vielen Fällen ist es vor allem in der kunststoffverarbeitenden Industrie auch erforderlich, der kunststoffverarbeitenden Maschine nicht nur eine Materialsorte, sondern zwei oder mehr Sorten gleichzeitig oder nacheinander zuzuführen, wobei das Verhältnis der einzelnen Komponenten zueinander vorab einstellbar sein sollte. Dies ist häufig dann der Fall, wenn auf einer Verarbeitungsmaschine Neuware und Mahlgut aus einer Beistellmühle in einem definierten, prozentualen Verhältnis zugeführt werden sollen. Um dies zu erreichen, ist bei der normalen Vakuumsaugtechnik gemäß dem Stand der Technik ein proportional arbeitendes Ventil in der Materialzuleitung vorgesehen, das abwechselnd die eine oder die andere Komponente absperrt bzw. freigibt.

Weiterhin sind auch sogenannte Drehrohrweichen bekannt, bei. denen eine Weiche abwechselnd zuerst eine und dann die andere Materialkomponente in die mit Vakuum beaufschlagte Materialförderleitung einbindet. Das Verhältnis der beiden zu fördernden Komponenten wird über variable Zeiteinstellungen für das Öffnen und Schließen der jeweiligen Materialleitungen vorgenommen. Um eine allzu große Schichtung einzelner Materialsorten zu vermeiden, wird in einstellbaren Zeitintervallen der Umschaltvorgang während der Förderperiode mehrmals wiederholt. Nachteilig an dieser bekannten Lösung ist die Tatsache, dass durch das Absperren in der Materialförderleitung ein nicht unbeträchtlicher Verschleiß an den Umsteuer- und Abdichtelementen auftritt und sich Teile des Fördergutes zwischen Ventil und Förderrohr bzw. Rohrweichenflügel und Gehäusewand einklemmen können, was zu Vakuumverlusten führt, die die Förderung wiederum stark beeinträchtigen oder verhindern können.

Der Erfindung liegt die Aufgabe zugrunde, ein möglichst universell einsetzbares Druckluftfördergerät für Schüttgüter zu schaffen, das möglichst einfach und verschleißarm aufgebaut ist und mit dem gleichzeitig oder nacheinander in einem vorwählbaren Verhältnis mindestens zwei Schüttgutsorten gefördert werden können.

Diese Aufgabe wird erfindungsgemäß durch die Merkmale des Anspruches 1 gelöst. Vorteilhafte Ausführungsformen der Erfindung sind in den weiteren Ansprüchen beschrieben.

Beim erfindungsgemäßen Druckluftfördergerät weist jede Druckluftzufuhrleitung ein über, eine zentrale Druckluftschalt- und -steuereinrichtung ansteuerbares Ventil zum Öffnen bzw. Schließen des Druckluftdurchflusses auf, so dass das Verhältnis der in den einzelnen Förderleitungen geförderten Schüttgutmengen durch Betätigung der in den Druckluftzufuhrleitungen vorgesehenen Ventile einstellbar ist.

Beim erfindungsgemäßen Druckluftfördergerät werden somit zum Einstellen der Schüttgutmengen in den einzelnen Förderleitungen keine Weichen, Verschlusseinrichtungen etc. verwendet, die in den Förderleitungen selbst vorgesehen wären, sondern in den Druckluftzufuhrleitungen vorgesehene Ventile, um die Druckluftzufuhr zu. den einzelnen Sauglanzen entweder in bestimmten Zeitintervallen oder in einem bestimmten Ausmaß zu öffnen oder zu schließen, um so das Verhältnis der Fördermengen in den einzelnen Förderleitungen einzustellen. Ein derartiges Druckluftfördergerät,kann auf sehr einfache Weise aufgebaut sein und unterliegt nur minimalem Verschleiß. Eine Beeinträchtigung der Saugleistung durch undichte Klappen oder Ventile in den Förderleitungen ist ausgeschlossen. Weiterhin kann beim erfindungsgemäßen Druckluftfördergerät das Verhältnis der Fördermengen auf sehr einfache Weise geändert werden.

Eine sehr preisgünstige Ausführung ergibt sich, wenn die Ventile aus Elektromagnetventilen bestehen. Derartige Elektromagnetventile können nur von der vollständig geöffneten in die vollständig geschlossene Lage und umgekehrt geschaltet werden. Die Einstellung des Förderverhältnisses zwischen den einzelnen Sauglanzen wird somit über die Zeitintervalle gesteuert, in denen die Elektromagnetventile geöffnet sind. Diese preisgünstige Technik wird vor allem bei Fördertechniken von ≤ 100 kg / h verwendet. Bei größeren Förderleistungen und je nach Anforderungsprofil kann es jedoch vorteilhaft sein, die Ventile in der Form von verstellbaren Proportionalventilen auszubilden. Dadurch ist es möglich, nicht nur die Förderzeiten für die einzelnen Komponenten festzulegen, sondern auch die Förderintensität durch die einzelnen Proportionalventile zu beeinflussen. Auf diese Weise ist es z.B. möglich, zwei oder mehr Schüttgüter gleichzeitig zu fördern, und dabei zusätzlich ein vorbestimmbares Mischungsverhältnis durch das teilweise Öffnen oder Schließen eines oder mehrerer Proportionalventile zu erhalten. Dies hat den Vorteil, dass im Abscheidebehälter keine Schichtung der einzelnen Schüttgutkomponenten vorzufinden ist, sondern eine relativ gute Vermischung von zwei oder mehreren Schüttgutkomponenten bei der Förderung und anschließender Luftabscheidung stattfindet.

Eine einfache und übersichtliche Ausführungsform ergibt sich, wenn die Ventile in einer Druckluftschalt- und -steuereinheit zusammengefasst sind, die einen Eingang für eine zentrale Druckluftversorgungsleitung aufweist, von der aus die Druckluftzufuhrleitungen abzweigen.

Zweckmäßigerweise schließt sich an die Förderleitungen eine Abscheideeinrichtung zum Abscheiden der Förderluft an. Die Förderleitungen können vor dieser Abscheideeinrichtung durch ein Y-förmiges Verbindungselement zusammengeführt sein, das mit einem Endabschnitt in die Abscheideeinrichtung mündet, oder nebeneinander, insbesondere parallel nebeneinander, in die Abscheideeinrichtung münden.

Vorteilhafterweise ist eine mit Druckluft arbeitende Filterreinigungseinrichtung zum Reinigen eines Staubfilters vorgesehen, wobei die Druckluft über eine an die Druckluftschalt- und -steuereinheit angeschlossene Druckluftzufuhrleitung zugeführt wird. Eine derartige Filterreinigungsvorrichtung ist dabei zweckmäßigerweise als Filterrückspüleinrichtung ausgebildet. Eine derartige Filterrückspüleinrichtung erübrigt das Ausbauen und die externe Reinigung des Schüttgut-Staubfilters und ermöglicht beim erfindungsgemäßen Druckluftfördergerät die automatische Reinigung des Staubfilters, beispielsweise mittels mehrerer Druckluftstöße oder durch einen rotierenden Luftausblasflügel. Beispielsweise kann über eine dritte Wegabzweigung von der zentralen Druckversorgungsleitung Druckluft über ein Ventil und eine Düse dem Filter zeitgesteuert oder stoßweise zugeführt werden, wodurch anhaltende Staubpartikel, abgeblasen bzw. abgerüttelt werden. Die Druckluftzuführung zur Filterreinigung kann in einstellbaren Intervallen zwischen den Schüttgutförderintervallen oder anschließend nach Beendigung der Schüttgutförderung durchgeführt werden.

Da in der Regel der Abscheidebehälter sich in einer Höhe befindet, der eine Bedienung von Hand nicht immer zulässt, ist es gemäß einer vorteilhaften Ausführungsform vorgesehen, die Druckluftschalt- und -steuereinheit abnehmbar an der Abscheideeinrichtung zu haltem. Die Druckluftschalt- und -steuereinheit ist in diesem Fall über Druckluftschläuche mit den mindestens zwei vorhandenen Sauglanzen und gegebenenfalls der Filterreinigungseinrichtung verbunden.

In einer Vielzahl von Anwendungsfällen ist nicht nur eine Förderung, sondern auch eine anschließende Trocknung der geförderten Schüttgutkomponenten notwendig. In diesem Fall kann es zweckmäßig sein, die Druckluftschalt- und - steuereinheit in eine Schalt- und Regeleinheit des Schüttguttrockners zu integrieren. Dies hat den, Vorteil, dass der apparative Mehraufwand relativ gering ist, da nur die Mehrfachventiltechnik an die vorhandene Schalt- und Regeleinheit adoptiert werden muss und zum anderen der Bediener die Möglichkeit hat, mit nur einer Schalt- und Steuereinheit an einem gemeinsamen Bedientableau sowohl die Parameter für die Trocknung als auch für die Förderung der Schüttgutkomponenten einzustellen.

Um den relativ hohen Abrieb, der bei der Förderung von abrasiven Schüttgütern, beispielsweise glasfaserverstärkten Kunststoffen, an der Abscheideeinrichtung zu vermeiden, ist es zweckmäßig, wenn die Abscheideeinrichtung zumindest in demjenigen Bereich, in dem die Förderleitung einmündet, aus einem Glaskörper besteht und die Förderleitung in den Glaskörper eingegossen ist. Vorteilhafterweise besteht das Glas aus Borosilikatglas mit hoher Abrasionsbeständigkeit und der in den Glaskörper eingegossene Abschnitt der Förderleitung aus Edelstahl. Dies hat den Vorteil, dass beim Abscheiden kaum mehr Berührungen zwischen dem geförderten Schüttgut und metallischen Bauteilen vorkommen, so dass der gewünschte Effekt erzielt wird. Auf diese Weise prallt das geförderte Schüttgut an die Glaswand, die Förderluft entweicht über den oben sitzenden Filter und das abgeschiedene Fördergut fällt durch Schwerkraft nach unten direkt in die Verarbeitungsmaschine bzw. den Behälter der Abscheideeinrichtung.

Bei der vorstehend beschriebenen Ausführungsform ist es auch vorteilhaft, die Füllstandsmesssonde, die ein Signal. für die Einleitung und Beendigung des Förderganges vorgibt, außerhalb des beispielsweise zylindrischen Glaskörpers anzuordnen, um eine Berührung von Fördergut und Sonde zu vermeiden. Eine derartige Füllstandsmesssonde kann beispielsweise als kapazitive Sonde oder als Lichtschranke ausgeführt sein.

Vorteilhafterweise sind die Sauglanzen als Ringspaltinjektoren oder Mehrfachdüseninjektoren ausgebildet. Die Druckluftzufuhrleitungen erstrecken sich dabei bis in die Nähe des vorderen Endes der Sauglanzen, wobei die Druckluftzufuhrleitungen zumindest in dem vorderen Endbereich der Sauglanzen innerhalb der Sauglanzen geführt sind. Dies hat den großen Vorteil, dass der Außendurchmesser der Sauglanzen relativ klein, besonders ≤ 50 mm, gehalten werden kann. Hierdurch sind die erfindungsgemäßen Sauglanzen auch für die Absaugung von Schüttgütern aus kleinen Beistell.mühlen geeignet, wie sie häufig beispielsweise zum Recyceln von Spritzgussmaterial verwendet werden. Diese bekannten Beistellmühlen weisen üblicherweise rohrförmige Absaugöffnungen mit einem Durchmesser ≤ 50 mm, oft auch nur 40 mm, auf. Mittels der erfindungsgemäßen Sauglanzen ist es daher möglich, die Sauglanzen mühelos in die Absaugrohre der Beistellmühlen zu stecken und bis nah an das abzusaugende Schüttgut zu führen, was bei Druckluftfördergeräten, die nach dem Strahlpumpenprinzip (Ejektorprinzip) arbeiten, für eine hohe Saugleistung, d.h. für einen hohen Wirkungsgrad, unbedingt erforderlich ist.

Aus Verschleißgründen besteht der innerhalb der Sauglanzen geführte Abschnitt der Druckluftzufuhrleitungen aus Edelstahl.

Vorteilhafterweise verläuft der innerhalb der Sauglanze geführte Abschnitt der Druckluftzufuhrleitung an der Sauglanzenwand entlang, d.h. in deren unmittelbarer Nachbarschaft.

Der Außendurchmesser der Druckluftzufuhrleitungen im Bereich der Sauglanzen beträgt beispielsweise 10 bis 20 mm.

Die Erfindung wird nachfolgend anhand der Zeichnungen beispielhaft näher erläutert. In diesen zeigen:
- Figur 1:: eine schematische Darstellung einer ersten Ausführungsform der Erfindung,
- Figur 2:: den oberen Glaskörper der Abscheideeinrichtung von Figur 1 von vorne,
- Figur 3:: eine alternative Ausführungsform des Glaskörpers von Figur 2,
- Figur 4:: eine schematische Darstellung einer zweiten Ausführungsform der Erfindung, und
- Figur 5: eine vergrößerte Einzeldarstellung einer erfindungsgemäßen Sauglanze.

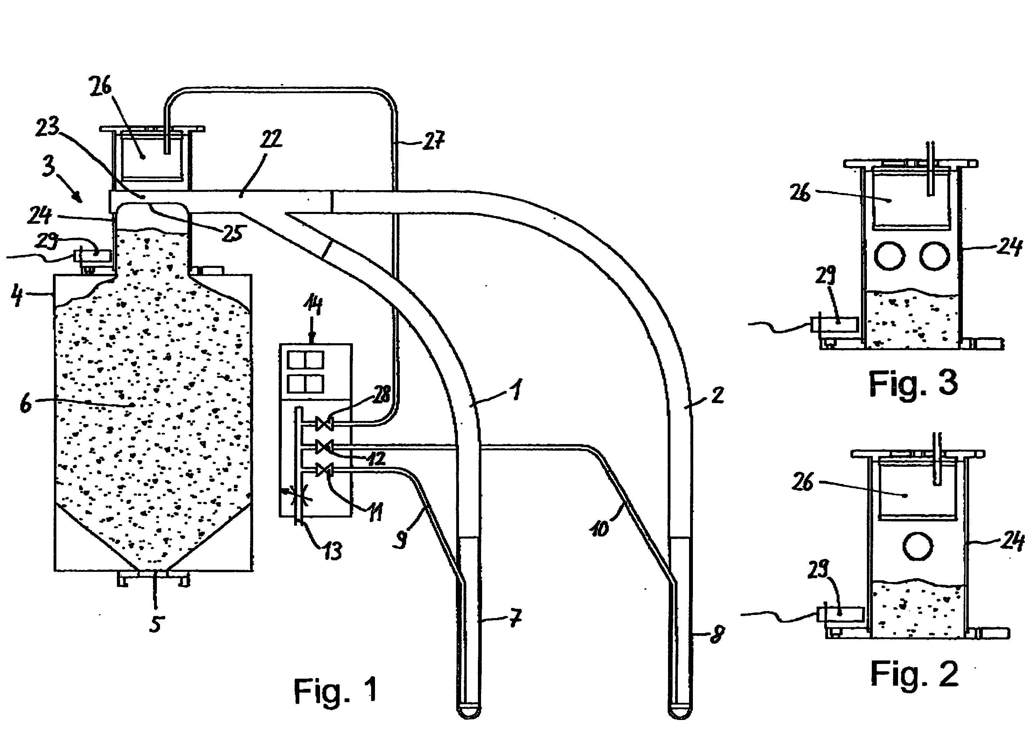

Das in Figur 1 dargestellte Druckluftfördergerät weist zwei Förderleitungen 1, 2 auf, mit denen zwei verschiedene oder gleiche Schüttgüter 6 in eine Abscheideeinrichtung 3 gefördert werden können. Die Abscheideeinrichtung 3 weist zum Sammeln dieses Schüttgutes 6 einen Abscheidebehälter 4 auf, der bei, dem gezeigten Ausführungsbeispiel unmittelbar auf eine verarbeitende Maschine, beispielsweise eine Spritzgießmaschine (Extruder), aufgesetzt werden kann.

Durch eine untere Öffnung 5 kann das sich im Abscheidebehälter 4 befindende Schüttgut 6 der Verarbeitungsmaschine zugeführt werden.

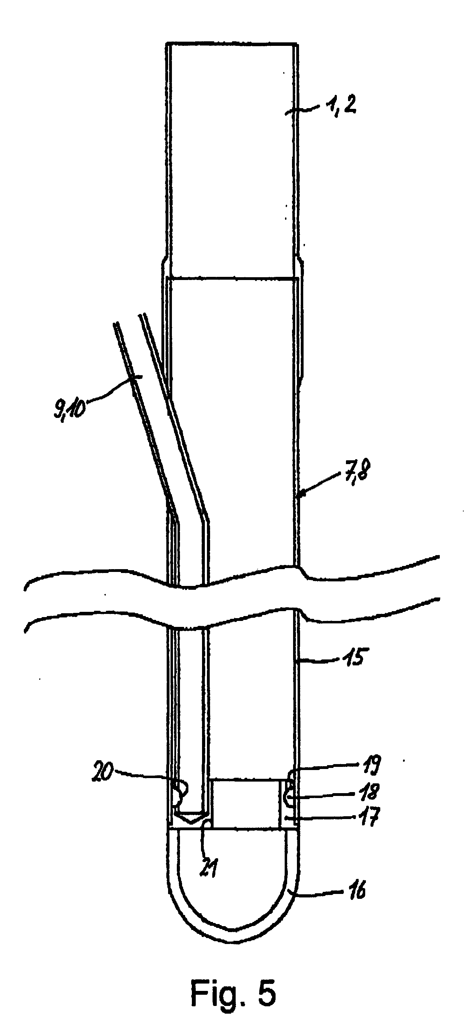

Die Förderleitungen 1, 2 weisen an ihrem freien, d.h. unterem Ende eine Sauglanze 7, 8 auf, die an ihrem unteren Ende geöffnet ist und im einzelnen später anhand der Figur 5 beschrieben wird.

Die Förderung des Schüttgutes 6 erfolgt mittels Druckluft, die über Druckluftzufuhrleitungen 9, 10 im unteren Endbereich der Sauglanzen 7, 8 zugeführt und dort in Förderrichtung umgelenkt wird, so dass der Druckluftförderstrom nach oben in Richtung Abscheideeinrichtung 3 gerichtet ist.

Die Zufuhr von Druckluft kann über Ventile 11, 12 gesteuert werden, welche in jeder Druckluftzufuhrleitung 9, 10 enthalten sind. Bei diesen Ventilen 11, 12 kann es sich um einfache Elektromagnetventile zum Öffnen und Schließen des Druckluftdurchflusses oder um Proportionalventile handeln, die auch ein teilweises Öffnen ermöglichen. Vor den Ventilen 11, 12 sind die Druckluftzufuhrleitungen 9, 10 an eine gemeinsame Druckluftversorgungsleitung 13 angeschlossen.

Zweckmäßigerweise befinden sich die Ventile 11, 12 innerhalb einer Druckluftschalt- und -steuereinheit 14, mittels der die Zeitintervalle zum Öffnen bzw. Schließen der Ventile 11, 12 eingestellt werden können bzw. diejenige Druckluftmenge eingestellt werden kann, die durch die einzelnen Druckluftzufuhrleitungen 9, 10 strömen soll. Diese Druckluftschalt- und - steuereinheit 14 kann beispielsweise in der Form eines -separaten Kastens ausgebildet sein, der an der Abscheideeinrichtung 3 abnehmbar gehalten ist.

Die Sauglanzen 7, 8 bestehen, wie im einzelnen auch aus Figur 5 ersichtlich, aus einem zylindrischen Rohr 15 konstanten Durchmessers. Am unteren Ende des zylindrischen Rohrs 15, das weitgehend geöffnet ist, befindet sich ein Abstandsbügel 16, der lediglich verhindern soll, dass sich die Sauglanzen 7, 8 an ihren unteren Enden am Boden des Schüttgutbehälters festsaugen. Dieser Abstandsbügel 16 verhindert jedoch nicht den freien Eintritt des Schüttgutes in das Innere der Sauglanzen 7, 8.

Am unteren Ende des zylindrischen Rohres 15 befindet sich innerhalb dieses Rohres 15 ein hülsenförmiges Druckluftumlenkelement 17, das an seinem Außenumfang einen umlaufenden Ringkanal 18 aufweist. Von diesem Ringkanal 18 aus erstreckt sich ein umlaufender, axialer Ringspalt 19 parallel zur Wand des zylindrischen Rohres 15 und in unmittelbarer Nähe derselben nach oben, so dass in den Ringspalt 18 eingeleitete Luft mit hoher Geschwindigkeit längs der inneren Umfangswand nach oben gefördert wird.

Die Einleitung der Druckluft in den Ringkanal 18 erfolgt dadurch, dass die Druckluftzufuhrleitungen 9, 10 im oberen Endbereich des zylindrischen Rohres 15 durch eine entsprechende Öffnung in der Seitenwand des Rohres 15 in dessen Innenraum eingeführt und unmittelbar längs der Seitenwand des Rohres 15 nach unten bis zum Druckluftumlenkelement 17 geführt ist. Ober eine seitliche Auslassöffnung 20 am unteren Ende der Druckluftzufuhrleitung 10, die zur Seitenwand des zylindrischen Rohres 15 hin ge-. richtet ist, wird die Druckluft -in den Ringkanal 18 eingepresst.

Dadurch, dass die Druckluft in dem Druckluftumlenkelement 17 nach oben umgelenkt wird, entsteht ein entsprechender Unterdruck an der Spitze der Sauglanze 7, 8, der das sich in diesem Bereich befindende Schüttgut mitreißt und nach oben fördert. Dieses Prinzip der Schüttgutförderung kann auch als Ejektorprinzip oder Prinzip der absaugenden Strahlpumpe genannt werden.

Die Druckzufuhrleitung 9, 10 befindet sich somit innerhalb des Förderstroms des Schüttgutes, behindert diesen jedoch nicht wesentlich, da der Durchmesser der Druckluftzufuhrleitung 9, 10 relativ klein, beispielsweise 10 bis 20 mm, ist, und sich das Druckluftzufuhrrohr 9, 10 andererseits ausschließlich im Seitenbereich des zylindrischen Rohres 15 befindet.

Die Befestigung der Druckluftzufuhrleitung 9, 10 innerhalb der Sauglanze 7, 8 erfolgt zweckmäßigerweise durch Festschweißen im oberen Durchtrittsbereich durch die Rohrwandung und im untersten Endbereich der Druckluftzufuhrleitung 9, 10.

Das Druckluftumlenkelement 17 weist im Bereich der Druckluftzufuhrleitung 9, 10 eine entsprechende axiale Aussparung 21 auf, damit das untere Ende der Druckluftzufuhrleitung 9, 10 bis fast zum unteren Ende des zylindrischen Rohres 15 geführt werden kann und die seitliche Auslassöffnung 20 auf gleicher Höhe wie der Ringkanal 18 liegt.

Anstelle des Ringspaltes 1,9 kann auch eine Mehrzahl, von über den Umfang regelmäßig verteilten Druckluftdüsen vorgesehen sein.

Das zylindrische Rohr 15 besteht zweckmäßigerweise ebenfalls aus einem verschleißfesten Material, beispielsweise Edelstahl.

Das obere Ende der Sauglanze 7, 8 ist mit der Förderleitung 1, 2 verbunden, wobei es sich bei den Förderleitungen 1, 2 um flexible Schläuche handeln kann.

Wesentlich ist, dass die Sauglanze 7, 8 über den überwiegenden Teil ihrer Länge einen gleichmäßigen, im vorliegenden Fall kreisförmigen Querschnitt aufweist, und die Druckluftzufuhrleitung 9, 10 in diesem Bereich nicht an der Außenseite, sondern im Inneren des zylindrischen Rohres 15 befestigt ist, so dass sehr kleine Außendurchmesser realisiert werden können.

Die beiden Förderleitungen 1, 2 werden in ihrem oberen Endbereich mittels eines Y-förmigen Verbindungselementes 22 zu einer einzigen Leitung zusammengeführt. Zweckmäßigerweise besteht dieses Verbindungselement 22 wieder aus einem verschleißarmen Edelstahl. Der Endabschnitt 23 des Verbindungselementes 22 ist in einem hohlzylinderförmigen Glaskörper 24 eingegossen, der sich auf der Oberseite des Abscheidebehälters 4 befindet und Teil der Abscheideeinrichtung 3 ist. An seiner Unterseite weist der Endabschnitt 23 eine längliche Öffnung 25 zum Austritt des geförderten Schüttgutes 6 auf. Oberhalb des Endabschnittes 23 befindet sich innerhalb des Glaskörpers 24 ein Staubfilter 26, um die nach oben entweichende Förderluft zu filtern. Zur Reinigung dieses Staubfilters 26 ist eine weitere Druckluftzufuhrleitung 27 vorgesehen, die in gleicher Weise wie die Druckluftzufuhrleitungen 9, 10 von der zentralen Druckluftversorgungsleitung, 13 abzweigt und mittels eines Ventils 28 geöffnet oder geschlossen werden kann. Diese Druckluftzufuhrleitung 27 mündet von oben her in den Glaskörper 24 und. in den Staubfilter 26. Durch Öffnen des Ventils 28 kann Druckluft entgegen der Strömungsrichtung der Förderluft in den Staubfilter 26 eingepresst werden, um diesen in der Art eines Rückspülfilters zu reinigen.

Selbstverständlich ist es auch möglich, den Staubfilter 26 extern, d.h. außerhalb der Abscheideeinrichtung 3 vorzusehen und die Förderluft mittels entsprechender Leitungen zu einem derartigen externen Staubfilter 26 zu führen.

Das Ventil 28 der Druckluftzufuhrleitung 27 ist wiederum Teil der Druckluftschaltund
-steuereinheit 14, so dass auch der Reinigungszyklus automatisiert ablaufen kann.

Wie aus Figur 2 ersichtlich, mündet der Endabschnitt 23 des Y-förmigen Verbindungselementes 22 etwa mittig in den Glaskörper 24. Alternativ hierzu ist es auch ohne weiteres möglich, wie aus Figur 3 ersichtlich, dass die beiden Förderleitungen 1,2 nicht mittels des Verbindungselementes 22 zusammengeführt werden, sondern einzeln nebeneinander in den Glaskörper 24 münden. In diesem Fall sind die beiden eingeführten Endstücke der Förderleitungen 1, 2 wiederum aus Edelstahl ausgebildet, wobei diese Endstücke außerhalb des Glaskörpers 24 an den übrigen Teil der Förderleitungen 1, 2 angekoppelt werden können.

Außerhalb des Glaskörpers 24 ist ferner eine Füllstandsmesssonde 29 zur Abgabe eines Start- oder Endesignals für den Fördervorgang angeordnet. Steigt das Schüttgut, wie in Figur 1 dargestellt, innerhalb des Abscheidebehälters 4 nach oben ein gewisses Maß über die Füllstandsmesssonde 29 hinaus, wird der Förderstrom mittels der Druckluftschalt- und -steuereinheit 14 automatisch unterbrochen. Sinkt der Füllstand innerhalb des Abscheidebehälters unterhalb des durch die Füllstandsmesssonde 29 bestimmten Niveaus, wird der Fördervorgang wieder gestartet.

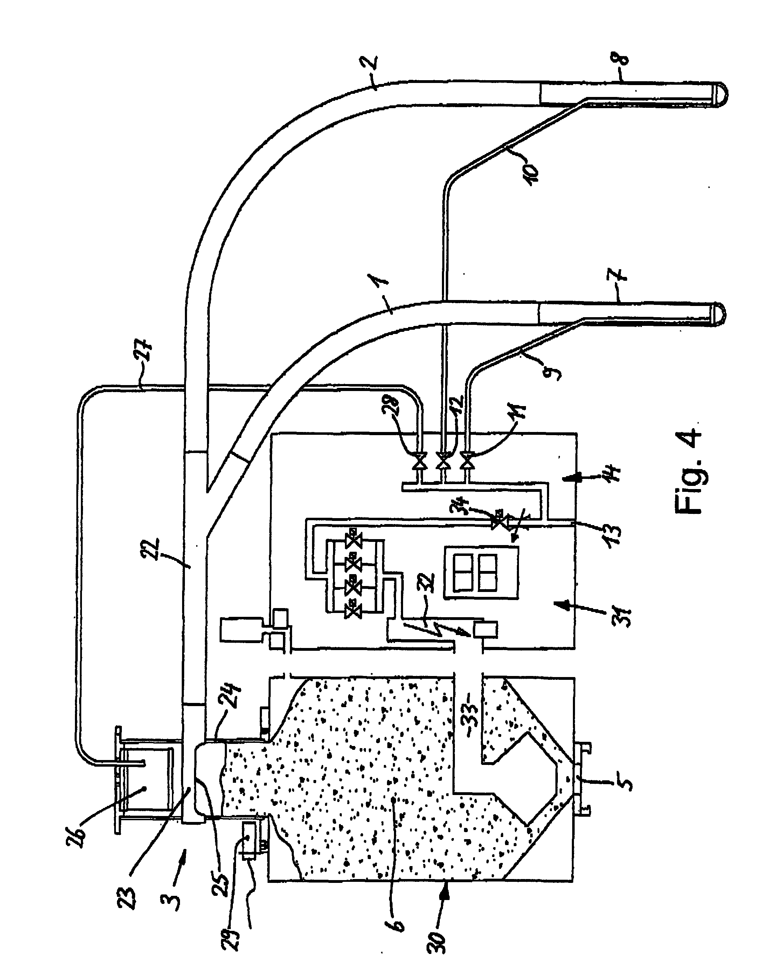

Aus Figur 4 ist ein weiteres Ausführungsbeispiel des erfindungsgemäßen Druckluftfördergeräts ersichtlich. Dieses Ausführungsbeispiel unterscheidet sich von demjenigen von Figur 1 dadurch, dass anstelle des Abscheidebehälters 4 eine Trocknungsvorrichtung 30 für das Schüttgut 6 vorgesehen und die Druckluftschalt- und -steuereinheit 14 in eine Schalt- und Regeleinheit 31 der Trocknungsvorrichtung 30 integriert ist. Die dort gezeigte Schalt- und Regeleinheit 31 kann wiederum an die Trocknungsvorrichtung 30 angekoppelt werden, wobei die Trocknungsluft, die nach dem Erwärmen mittels einer Heizeinrichtung 32 in ein Luftverteilerrohr 33 der Trocknungsvorrichtung 30 eingeführt wird, von der zentralen Druckluftversorgungsleitung 13 abgezweigt wird. Ober ein nach dieser Abzweigung vorgesehenes Druckregelventil 34 kann der Luftdruck entsprechend abgesenkt werden.

Die übrigen Bestandteile des Druckluftfördergeräts entsprechen im wesentlichen der Ausführungsform von Figur 1.

Wesentlich ist jedoch auch bei dieser Ausführungsform, dass die Ventile 11, 12 von der Druckluftschalt- und -steuereinheit 14 zwischen einer ganz oder teilweise geöffneten und geschlossenen Stellung umschaltbar sind, so dass mit der eingeleiteten Förderluft zwei (verschiedene oder gleichartige) Schüttgüter in einem vorbestimmten Verhältnis gleichzeitig oder nacheinander gefördert werden können. Weiterhin ist auch das Ventil 28 von der Druckluftschalt- und - steuereinheit 14 zwischen einer ganz oder teilweise geöffneten und geschlossenen Stellung umschaltbar, so dass der Staubfilter 26 in Intervallen oder nach Beendigung des Fördervorgangs mit Druckluft gereinigt werden kann. Dies kann insbesondere durch kurze, schnelle aufeinanderfolgende Druckluftstöße erfolgen. Es ist auch ohne weiteres möglich, mehr als zwei Förderleitungen mit entsprechenden Druckluftzufuhrleitungen und Ventilen über die Druckluftschaltund -steuereinheit 14 zentral zu steuern.

## Patentansprüche

1. Druckluftfördergerät für Schüttgüter, insbesondere Kunststoffgranulat oder -pulver, mit mindestens zwei Förderleitungen (1, 2), die an einem Ende jeweils eine mit Druckluft arbeitende rohrförmige Sauglanze (7, 8) zum Ansaugen von Schüttgut (6) aufweisen, wobei jede Sauglanze (7, 8) mit einer Druckluftzufuhrleitung (9, 10) verbunden ist,
**dadurch gekennzeichnet, dass**
jede Druckluftzufuhrleitung (9, 10) ein über eine zentrale Druckluftschalt- und - steuereinrichtung (14) ansteuerbares Ventil (11, 12) zum Öffnen bzw. Schließen des Druckluftdurchflusses aufweist, so dass das Verhältnis der in den einzelnen Förderleitungen (1, 2) geförderten Schüttgutmengen durch Betätigung der in den Druckluftzufuhrleitungen (9, 10) vorgesehenen Ventile (11, 12) einstellbar ist.

2. Druckluftfördergerät nach Anspruch 1,
**dadurch gekennzeichnet, dass**
die Ventile (11, 12) aus Elektromagnetventilen bestehen.

3. Druckluftfördergerät nach Anspruch 1 oder 2,
**dadurch gekennzeichnet, dass**
die Ventile (11, 12) aus verstellbaren Proportionalventilen bestehen.

4. Druckluftfördergerät nach einem der vorhergehenden Ansprüche,
**dadurch gekennzeichnet, dass**
die Ventile (11, 12) in der Druckluftschalt- und -steuereinheit (14) zusammengefasst sind, die einen Eingang für eine zentrale Druckluftversorgungsleitung (13) aufweist, von der aus die Druckluftzufuhrleitungen (9,10) abzweigen.

5. Druckluftfördergerät nach einem der vorhergehenden Ansprüche,
**dadurch gekennzeichnet, dass**
- den Förderleitungen (1, 2) eine Abscheideeinrichtung (3) zum Abscheiden der Förderluft nachgeordnet ist, und insbesondere
- die Förderleitungen (1, 2) vor der Abscheideeinrichtung (3) durch ein Y-förmiges Verbindungselement (22) zusammengeführt sind, das mit einem Endabschnitt (23) in die Abscheideeinrichtung (3) mündet.

6. Druckluftfördergerät nach Anspruch 5,
**dadurch gekennzeichnet, dass**
die Förderleitungen (1, 2) nebeneinander in die Abscheideeinrichtung (3) münden.

7. Druckluftfördergerät nach einem der vorhergehenden Ansprüche,
**dadurch gekennzeichnet, dass**
- eine mit Druckluft arbeitende Filterreinigungseinrichtung zum Reinigen eines Staubfilters (26) vorgesehen ist, wobei die Druckluft über eine an die Druckluftschalt- und -steuereinheit (14) angeschlossene Druckluftzufuhrleitung (27) zugeführt wird, und insbesondere
- in der Druckluftzufuhrleitung (27) der Filterreinigungseinrichtung ein Ventil (28) vorgesehen ist, das von der Druckluftschalt- und -steuereinheit (14) zwischen einer ganz oder teilweisen geöffneten und einer geschlossenen Stellung umschaltbar ist.

8. Druckluftfördergerät nach Anspruch 7,
**dadurch gekennzeichnet, dass**
- die Druckluftzufuhrleitung (27) der Filterreinigungseinrichtung von der zentralen Druckluftversorgungsleitung (13) abzweigt, wobei die Abzweigung und das hinter der Abzweigung angeordnete Ventil (28) innerhalb der Druckluftschalt- und -steuereinheit (14) angeordnet sind, und insbesondere
- die Filterreinigungseinrichtung als Filterrückspüleinrichtung ausgebildet ist.

9. Druckluftfördergerät nach einem der Ansprüche 5 bis 8,
**dadurch gekennzeichnet, dass**
die Druckluftschalt- und --steuereinheit (14) abnehmbar an der Abscheideeinrichtung (3) gehalten ist.

10. Druckluftfördergerät nach einem der vorhergehenden Ansprüche,
**dadurch gekennzeichnet, dass**
die Druckluftschalt- und -steuereinheit (14) in eine Schalt- und Regeleinheit (31) einer Trocknungsvorrichtung (30) für das Schüttgut (6) integriert ist.

11. Druckluftfördergerät nach einem der Ansprüche 5 bis 10,
**dadurch gekennzeichnet, dass**
die Abscheideeinrichtung (3) zumindest in demjenigen Bereich, in den die Förderleitung(en) (1, 2) einmündet bzw. einmünden, aus einem Glaskörper (24) besteht und die Förderleitung(en) (1, 2) in den Glaskörper (24) eingegossen ist bzw. sind.

12. Druckluftfördergerät nach einem der vorhergehenden Ansprüche,
**dadurch gekennzeichnet, dass**
- die Sauglanzen (7, 8) als Ringspaltinjektor oder Mehrfachdüseninjektor ausgebildet sind und sich die Druckluftzufuhrleitungen (9, 10) bis in die Nähe des vorderen Endes der Sauglanzen (7, 8) erstrecken, wobei die Druckluftzufuhrleitungen (9, 10) zumindest im vorderen Endbereich der Sauglanzen, (7, 8) innerhalb der Sauglanzen (7, 8) geführt sind, und insbesondere
- die Druckluftzufuhrleitungen (9, 10) über eine im hinteren Abschnitt der Sauglanze (7, 8) angeordnete Wandöffnung in das Innere der Sauglanze (7, 8) geführt ist.

13. Druckluftfördergerät nach Anspruch 12,
**dadurch gekennzeichnet, dass** der innerhalb der Sauglanze (7, 8) geführte Abschnitt der Druckluftzufuhrleitung (9, 10) an der Sauglanzenwand entlang verläuft.

14. Druckluftfördergerät nach einem der vorhergehenden Ansprüche,
**dadurch gekennzeichnet, dass**
- die gesamte Sauglanze (7, 8) einen kreisförmigen Querschnitt hat und zumindest im wesentlichen denselben Außendurchmesser aufweist, und insbesondere
- der Außendurchmesser der Sauglanzen (7, 8) kleiner oder gleich 50 mm beträgt.

15. Druckluftfördergerät nach einem der vorhergehenden Ansprüche,
**dadurch gekennzeichnet, dass**
die Druckluftzufuhrleitung (9, 10) im Bereich der Sauglanzenspitze in einen, sich um den Innenumfang der Sauglanzenwand herum erstreckenden Ringkanal (18) mündet, der mit einem nach rückwärts offenen Ringspalt (19) oder mit nach rückwärts offenen Düsen in Verbindung steht.

16. Druckluftfördergerät nach einem der Ansprüche 5 bis 15,
**dadurch gekennzeichnet, dass**
außerhalb eines Abscheidebehälters (4) eine Füllstandsmesssonde (29) zur Abgabe eines Start- oder Endesignals für den Fördervorgang angeordnet ist.

## Claims

1. A compressed air conveyor apparatus for bulk materials, in particular plastic granules or powder, comprising at least two conveyor conduits (1, 2) which at one end each have a tubular suction lance (7, 8) operating with compressed air for sucking in bulk material (6), wherein each suction lance (7, 8) is connected to a compressed air feed conduit (9, 10),
**characterised in that**
each compressed air feed conduit (9, 10) has a valve (11, 12) actuable by way of a central compressed air switching and control device (14), for respectively opening and closing the compressed air flow, so that the ratio of the amounts of bulk material conveyed in the individual conveyor conduits (1, 2) can be adjusted by actuation of the valves (11, 12) provided in the compressed air feed conduits (9, 10).

2. A compressed air conveyor apparatus according to claim 1 **characterised in that** the valves (11, 12) comprise solenoid valves.

3. A compressed air conveyor apparatus according to claim 1 or claim 2 **characterised in that** the valves (11, 12) comprise displaceable proportional valves.

4. A compressed air conveyor apparatus according to one of the preceding claims **characterised in that** the valves (11, 12) are combined in the compressed air switching and control unit (14) which has an intake for a central compressed air supply conduit (13) from which the compressed air feed conduits (9, 10) branch.

5. A compressed air conveyor apparatus according to one of the preceding claims **characterised in that**
- arranged downstream of the conveyor conduits (1, 2) is a separating device (3) for separating off the conveyor air, and in particular
- the conveyor conduits (1, 2) are brought together upstream of the separating device (3) by a Y-shaped connecting element (22) which opens with an end portion (23) into the separating device (3).

6. A compressed air conveyor apparatus according to claim 5 **characterised in that** the conveyor conduits (1, 2) open in mutually juxtaposed relationship into the separating device (3).

7. A compressed air conveyor apparatus according to one of the preceding claims **characterised in that**
- there is provided a filter cleaning device operating with compressed air for cleaning a dust filter (26), wherein the compressed air is fed by way of a compressed air feed conduit (27) connected to the compressed air switching and control unit (14), and in particular
- provided in the compressed air feed conduit (27) of the filter cleaning device is a valve (28) which can be switched over by the compressed air switching and control unit (14) between an entirely or partially opened position and a closed position.

8. A compressed air conveyor apparatus according to claim 7 **characterised in that**
- the compressed air feed conduit (27) of the filter cleaning device branches from the central compressed air supply conduit (13), wherein the branching and the valve (28) arranged downstream of the branching are disposed within the compressed air switching and control unit (14), and in particular
- the filter cleaning device is in the form of a filter backflushing device.

9. A compressed air conveyor apparatus according to one of claims 5 to 8 **characterised in that** the compressed air switching and control unit (14) is held removably to the separating device (3).

10. A compressed air conveyor apparatus according to one of the preceding claims **characterised in that** the compressed air switching and control unit (14) is integrated into a switching and regulating unit (31) of a drying device (30) for the bulk material (6).

11. A compressed air conveyor apparatus according to one of claims 5 to 10 **characterised in that** the separating device (3), at least **in that** region into which the conveyor conduit or conduits (1, 2) opens or open, comprises a glass body (24) and the conveyor conduit or conduits (1, 2) is or are cast into the glass body (24).

12. A compressed air conveyor apparatus according to one of the preceding claims **characterised in that**
- the suction lances (7, 8) are in the form of annular gap injectors or multiple nozzle injectors and the compressed air feed conduits (9, 10) extend into the proximity of the front end of the suction lances (7, 8), wherein the compressed air feed conduits (9, 10) are guided within the suction lances (7, 8) at least in the front end region of the suction lances (7, 8), and in particular
- the compressed air feed conduits (9, 10) are passed into the interior of the suction lance (7, 8) by way of a wall opening in the rear portion of the suction lance (7, 8).

13. A compressed air conveyor apparatus according to claim 12 **characterised in that** the portion of the compressed air feed conduit (9, 10) which is passed within the suction lance (7, 8) extends along the suction lance wall.

14. A compressed air conveyor apparatus according to one of the preceding claims **characterised in that**
- the entire suction lance (7, 8) is of a circular cross-section and is at least substantially of the same outside diameter, and in particular
- the outside diameter of the suction lances (7, 8) is less than or equal to 50 mm.

15. A compressed air conveyor apparatus according to one of the preceding claims **characterised in that** the compressed air feed conduit (9, 10) opens in the region of the suction lance tip into an annular passage (18) which extends around the inside periphery of the suction lance wall and which communicates with a rearwardly open annular gap (19) or with rearwardly open nozzles.

16. A compressed air conveyor apparatus according to one of claims 5 to 15 **characterised in that** arranged outside the separating container (4) is a filling level measuring probe (29) for delivering a start or end signal for the conveyor operation.

## Revendications

1. Appareil de transport à air comprimé pour matières en vrac, en particulier des granulés ou de la poudre de matière synthétique, avec au moins deux conduites de transport (1, 2) qui présentent à une extrémité respectivement une lance d'aspiration (7, 8) tubulaire fonctionnant avec l'air comprimé pour l'aspiration de la matière en vrac (6), chaque lance d'aspiration (7, 8) étant reliée à une conduite d'amenée de l'air comprimé,
**caractérisé en ce que** chaque conduite d'amenée d'air comprimé (9, 10) présente une valve (11, 12) commandable par un dispositif central de commande (14) de l'air comprimé pour l'ouverture et la fermeture du débit de l'air comprimé de sorte que le rapport des quantités de matière en vrac transportées dans les différents conduites de transport (1, 2) est réglable par l'actionnement des valves (11, 12) prévues dans les conduites d'amenée d'air comprimé (9, 10).

2. Appareil de transport à air comprimé selon la revendication 1, **caractérisé en ce que** les valves (11, 12) se composent de valves électromagnétiques.

3. Appareil de transport à air comprimé selon la revendication 1 ou 2, **caractérisé en ce que** les valves (11, 12) se composent de valves proportionnelles réglables.

4. Appareil de transport à air comprimé selon l'une des revendications précédentes, **caractérisé en ce que** les valves (11, 12) sont rassemblées dans l'unité de commande de l'air comprimé (14) qui présente une entrée pour une conduite d'alimentation d'air comprimé (13) d'où sont dérivées les conduites d'amenée de l'air comprimé (9, 10).

5. Appareil de transport à air comprimé selon l'une des revendications précédentes, **caractérisé**
- **en ce qu'**un dispositif de séparation (3) est placé après les conduites de transport (1, 2) pour la séparation de l'air de transport et en particulier,
- **en ce que** les conduites de transport (1, 2) sont rassemblées avant le dispositif de séparation (3) par un élément de liaison (22) en forme de Y qui débouche avec une section d'extrémité (23) dans le dispositif de séparation (3).

6. Appareil de transport à air comprimé selon la revendication 5, **caractérisé en ce que** les conduites de transport (1, 2) débouchent les unes à côté des autres dans le dispositif de séparation (3).

7. Appareil de transport à air comprimé selon l'une des revendications précédentes, **caractérisé**
- **en ce qu'**il est prévu un dispositif de nettoyage de filtre fonctionnant à l'air comprimé pour le nettoyage d'un filtre à poussière (26), l'air comprimé étant amené par une conduite d'amenée de l'air comprimé (27) raccordée à l'unité de commande de l'air comprimé (14) et en particulier
- il es prévu dans la conduite d'amenée de l'air comprimé (27) du dispositif de nettoyage de filtre une valve (28) qui peut commutée par l'unité de commande d'air comprimé (14) entre une position fermée et une position complètement ou partiellement ouverte.

8. Appareil de transport à air comprimé selon la revendication 7, **caractérisé**
- **en ce que** la conduite d'amenée de l'air comprimé (27) du dispositif de nettoyage de filtre est ramifiée de la conduite d'alimentation d'air comprimé centrale (13), la dérivation et la valve (28) disposée derrière la ramification sont disposées à l'intérieur de l'unité de commande de l'air comprimé (14) et en particulier
- le dispositif de nettoyage de filtre est conçu comme un dispositif de rétro-rinçage de filtre.

9. Appareil de transport à air comprimé selon l'une des revendications 5 à 8, **caractérisé en ce que** l'unité de commande de l'air comprimé (14) est maintenue amovible sur le dispositif de séparation (3).

10. Appareil de transport à air comprimé selon l'une des revendications précédentes, **caractérisé en ce que** l'unité de commande de l'air comprimé (14) est intégrée dans une unité de réglage et de commande (31) d'un dispositif de séchage (30) pour la matière en vrac (6).

11. Appareil de transport à air comprimé selon l'une des revendications 5 à 10, **caractérisé en ce que** le dispositif de séparation (3) se compose du moins dans la zone où débouche(nt) la(les) conduite(s) de transport (1, 2) d'un corps de verre (24) et les conduites de transport (1, 2) sont moulées dans le corps de verre (24).

12. Appareil de transport à air comprimé selon l'une des revendications précédentes, **caractérisé**
- **en ce que** les lances d'aspiration (7, 8) sont réalisées comme des injecteurs annulaires fendus ou en tant qu'injecteur à buses multiples et que les conduites d'amenée de l'air comprimé (9, 10) s'étendent jusqu'à proximité de l'extrémité avant des lances d'aspiration (7, 8), les conduites d'amenée de l'air comprimé (9, 10) étant guidées au moins dans la zone avant d'extrémité des lances d'aspiration (7, 8) à l'intérieur des lances d'aspiration (7, 8), et en particulier
- **en ce que** les conduites d'amenée de l'air comprimé (9, 10) sont guidées par une ouverture murale disposée dans la section arrière des lances d'aspiration (7, 8) à l'intérieur de la lance d'aspiration (7, 8).

13. Appareil de transport à air comprimé selon la revendication 12, **caractérisé en ce que** la section guidée à l'intérieur de la lance d'aspiration (7, 8) de la conduite d'amenée de l'air comprimé (9, 10) s'étend le long de la paroi de la lance d'aspiration.

14. Appareil de transport à air comprimé selon l'une des revendications précédentes, **caractérisé**
- **en ce que** l'ensemble de la lance d'aspiration (7, 8) présente une section transversale circulaire et présente au mois sensiblement le même diamètre externe et en particulier
- le diamètre externe des lances d'aspiration (7, 8) est inférieur ou égal à 50 mm.

15. Appareil de transport à air comprimé selon l'une des revendications précédentes, **caractérisé en ce que** la conduite d'amenée de l'air comprimé (9, 10) débouche dans la zone de la pointe de la lance d'aspiration dans une canal annulaire (18) s'étendant autour de la périphérie interne de la paroi de lance d'aspiration et relié à une fente annulaire ouverte (19) vers l'arrière ou à des buses ouvertes vers l'arrière.

16. Appareil de transport à air comprimé selon l'une des revendications 5 à 15, **caractérisé en ce qu'**à l'extérieur d'un récipient de séparation (4) est disposée une sonde de mesure de niveau (29) pour la délivrance d'un signal de départ ou de fin pour l'opération de transport.
